# EUROPÄISCHE PATENTSCHRIFT

(11) **EP 3 823 876 B1**
(45) Veröffentlichungstag und Bekanntmachung des Hinweises auf die Patenterteilung: **12.06.2024**
(21) Anmeldenummer: 19735514.2
(22) Anmeldetag: 26.06.2019
(51) Int. Cl.: B61L 27/53, B61L 1/04, B61L 1/06, B61L 3/04

(54) **VERFAHREN UND ANORDNUNG ZUM WIEDERERKENNEN EINES SCHIENENFAHRZEUGRADES**
METHOD AND ARRANGEMENT FOR IDENTIFYING A RAIL VEHICLE WHEEL
PROCÉDÉ ET SYSTÈME DE RECONNAISSANCE D'UNE ROUE DE VÉHICULE FERROVIAIRE

(30) Priorität: 20.07.2018 DE 102018117579
(43) Veröffentlichungstag der Anmeldung: 26.05.2021
(73) Patentinhaber: Schenck Process Europe GmbH, 64293 Darmstadt (DE)
(72) Erfinder: MUELLER, Ralph, 64289 Darmstadt (DE); RAIS, Viktor, 64293 Darmstadt (DE)
(86) Internationale Anmeldenummer: PCT/EP2019/066926
(87) Internationale Veröffentlichungsnummer: WO 2020/015960

(56) Entgegenhaltungen:
- EP-A1- 1 207 091
- WO-A1-00/73118
- MATTHIAS WOLF ET AL: "Anwendung von "Wayside Acoustic Monitoring" bei der DB AG - Use of "Wayside Acoustic Monitoring" by DB AG", SIGNAL UND DRAHT: SIGNALLING & DATACOMMUNICATION, Bd. 110, Nr. 4, 10. April 2018 (2018-04-10), Seiten 27-32, XP055469208, DE ISSN: 0037-4997

## Beschreibung

Die Erfindung betrifft ein Verfahren zum Wiedererkennen eines Schienenfahrzeugrades sowie eine Anordnung zum Wiedererkennen eines Schienenfahrzeugrades.

Um eine Sicherheit in einem Schienenverkehr, bei welchem Schienenfahrzeuge in einem Schienennetz verkehren, zu gewährleisten bzw. zu erhöhen, werden der Schienenverkehr bzw. die - auf Gleisen bzw. auf Schienen des Schienennetzes - verkehrenden Schienenfahrzeuge mittels entsprechender Überwachungssysteme überwacht.

Hierbei sind - bei solchen Überwachungssystemen - ortsfeste, d. h. an den Schienen angeordnete, Überwachungssysteme bekannt, welche auf die Schienen wirkende Belastungen ermitteln, insbesondere, wenn sich Schienenfahrzeuge im Fahrbetrieb auf den Schienen des Schienennetzes befinden bzw. diese überfahren.

Beispielsweise ist aus dem Stand der Technik die EP 1 207 091 A eine Einrichtung zum Erkennen von Unregelmäßigkeiten an Schienenfahrzeugrädern bekannt, bei denen Sensoren in Form von Glasfasern mit der Schiene gekoppelt sind und entsprechend der Pegeländerungen eines vom Sensor detektierten Signals beim Überfahren des Schienenfahrzeugs auf das Vorhandensein von Unregelmäßigkeiten geschlossen werden kann.

Aus der WO 00/73118 A1 ist eine Vorrichtung zur Überwachung des Zustands von Schienenfahrzeugrädern bekannt, bei der mittels einer Messstrecke aus unterhalb der Eisenbahnschiene angeordneten Kraftsensoren ebenfalls Signale des dar-überfahrenden Schienenfahrzeugrades ausgewertet werden. Bei der Signalauswertung wird ein Summensignal der Signale aufeinanderfolgender Kraftsensoren gebildet, so dass die Signalform eines schadensbelasteten Rades ermittelt und einer Schadensart zugeordnet werden kann.

Weiterhin beschreibt beispielsweise das Dokument "MULTIRAIL WheelScan", Schenck Process GmbH, BV-D2144DE, 2013, - mit dem System "MULTIRAIL WheelScan" - ein solches ortsfeste Überwachungssystem.

"MULTIRAIL WheelScan" stellt eine in eine Schiene integrierte und mit Messsensoren oder Wägezellen ausgestattete Mess-Betonschwelle zur Verfügung, deren Messsensoren die Belastungen, d.h. hier Vertikalkräfte, - infolge von Gewichts- und Spurführungskräften auf die Schiene - hochgenau messen - und für eine Rad-Diagnose (Erkennung von Rad-Imperfektionen, wie Flachstellen, Rauheiten oder Unrundheiten), Waggonerkennung, Streckenlastkontrolle oder auch Beladungsregelung u. Ä. auswerten.

Bei einer solchen Rad-Diagnose durch "MULTIRAIL WheelScan" werden beispielsweise aus den - bei Überfahrt eines Schienenfahrzeugs über "MULTIRAIL WheelScan" gemessenen - Belastungen Positionen und Maße von Imperfektionen, wie Unrundheiten, rad- bzw. waggonweise für das Schienenfahrzeug ermittelt.

Um die Belastungsmessungen und Auswertungen von solchen Überwachungssystemen bzw. Belastungs-Messeinrichtungen, wie "MULTIRAIL WheelScan", dann aber dem jeweiligen, das Überwachungssystem bzw. die Belastungs-Messeinrichtung (bei der Belastungsmessung) überfahrenden Schienenfahrzeug zuordnen zu können , um so auch eine längerfristige Trendverfolgung bzw. ein Condition-Monitoring eines Schienenfahrzeugs ermöglichen zu können, ist eine Wiedererkennung und Identifikation des Schienenfahrzeugs notwendig.

Dieses kann über Nummernkennungen oder Funketiketten (RFID) am Schienenfahrzeug erfolgen, welche parallel zur Belastungsmessung durch das Überwachungssystem/die Belastungs-Messeinrichtung mittels entsprechender Lese- Systeme eingelesen und dann der Belastungsmessung des Überwachungssystems/der Belastungs-Messeinrichtung zugeordnet werden.

Dieses erfordert allerdings, dass das Überwachungssystem bzw. die Belastungs-Messeinrichtung und das Lese-/Identifikationssystem unmittelbar koordiniert sind und unmittelbar miteinander kommunizieren - oder dass beide Systeme ihre Ergebnisse einer zentralen Stelle zur Verfügung stellen, an welcher dann die Zuordnung erfolgen kann, beispielsweise eine zentrale Zuglaufdatenbank.

Beides - ob unmittelbar koordinierte und kommunizierende Systeme oder eine zentrale, die Systeme (mittelbar) koordinierende Stelle - ist aufwändig und/oder erfordert zusätzliche Ausrüstung/-stattung, was wiederum zu erhöhten Kosten und Fehleranfälligkeiten führt.

Eine Aufgabe der Erfindung ist es, Nachteile im Stand der Technik zu verbessern. Insbesondere ist eine Aufgabe der Erfindung, die Überwachung von Schienenverkehr/Schienenfahrzeugen einfach, kostengünstiger und sicherer zu gestalten. Im Speziellen ist es auch Aufgabe der Erfindung, Schienenfahrzeuge zu/bei deren Überwachung auf einfache, kostengünstige und sichere bzw. zuverlässige Weise effizient wiederzuerkennen oder identifizieren zu können.

Diese Aufgabe wird gelöst durch ein Verfahren zum Wiedererkennen eines Schienenfahrzeugrades sowie eine Anordnung zum Wiedererkennen eines Schienenfahrzeugrades mit den Merkmalen des jeweiligen unabhängigen Anspruchs.

Vorteilhafte Weiterbildungen der Erfindung sind Gegenstand abhängiger Ansprüche sowie der nachfolgenden Beschreibung. Außerdem können sich die nachfolgend beschriebenen Merkmale sowohl auf das erfindungsgemäße Verfahren als auf die erfindungsgemäße Anordnung beziehen.

Die Anordnung zum Wiedererkennen eines Schienenfahrzeugrades sieht eine Ermittlungseinheit vor, welche eingerichtet ist zur Durchführung des Verfahrens zum Wiedererkennen eines Schienenfahrzeugrades.

Bei dem Verfahren zum Wiedererkennen eines Schienenfahrzeugrades ist vorgesehen, dass unter Verwendung eines - mittels einer an einer Schiene angeordneten Belastungs-Messeinrichtung, wie beispielsweise "MULTIRAIL WheelScan", im Folgenden auch "Überwachungssystem" ermittelten - Überrollsignals von einem beliebigen Schienenfahrzeugrad ein spezifisches Erkennungsmuster dieses Schienenfahrzeugrades ermittelt wird.

Dieses Überrollsignal beschreibt dabei einen zeitlichen Verlauf einer durch das Schienenfahrzeugrad auf die mit der Belastungs-Messeinrichtung ausgestatteten Schiene bewirkte Schienenbelastung beim Überrollen.

Ein solches Überrollsignal kann beispielsweise ein Kraft-, Momenten- und/oder Beschleunigungssignal aus einer Belastungs-Messeinrichtung bzw. aus einem Überwachungssystem, wie beispielsweise "MULTIRAIL WheelScan", sein.

Zweckmäßigerweise wird das Überrollsignal mittels der Belastungs-Messeinrichtung ermittelt, insbesondere mittels einer Messstrecke, die eine Messschiene oder eine Messschwelle umfasst, wenn das zu identifizierende Schienenfahrzeugrad die mit der Belastungs-Messeinrichtung ausgestattete Schiene überrollt, beispielsweise mittels "MULTIRAIL WheelScan".

Anders bzw. anordnungsseitig ausgedrückt, die Anordnung kann zweckmäßigerweise eine Belastungs-Messeinrichtung, insbesondere eine Messstrecke mit einer Messschiene oder einer Messschwelle vorsehen, welche eingerichtet ist zur Ermittlung des Überrollsignals, so beispielsweise "MULTIRAIL WheelScan".

Das spezifische Erkennungsmuster umfasst einen oder mehrere jeweils unter Verwendung des Überrollsignals ermittelte zeitunabhängige Identifikationsparameter/- kennwerte.

Kurz und einfach ausgedrückt, aus dem Überrollsignal wird der oder die mehreren zeitunabhängigen Identifikationsparameter/-kennwerte gebildet, welche das spezifische Erkennungsmuster des zu identifizierenden Schienenfahrzeugrades darstellen bzw. zu diesem kombiniert werden.

Ein solcher Identifikationsparameter/-kennwert kann beispielsweise ein Radumfang, eine Imperfektion, insbesondere eine Flachstelle, eine Rauheit oder eine Unrundheit, insbesondere eine periodische Unrundheit, und/oder ein Belastungsverlauf in Abhängigkeit eines Radwinkels oder eines Radumfangs, insbesondere ein phasenbereinigter und/oder normierter Belastungsverlauf, und/oder ein Frequenzspektrum, ein Wellenlängenspektrum oder deren Amplitudenverhältnisse eines Belastungsverlaufs sein.

Umfasst das spezifische Erkennungsmuster mehrere, jeweils unter Verwendung des Überrollsignals ermittelte zeitunabhängige Identifikationsparameter/-kennwerte, so können diese als Einzelparameter/-kennwerte im spezifischen Erkennungsmuster weiterbestehen. Alternativ dazu können diese in einen Gesamtparameter/-kennwert, welcher dann das spezifische Erkennungsmuster bildet, zusammengeführt/kombiniert werden.

Weiter wird dann bei dem Verfahren zum Wiedererkennen eines Schienenfahrzeugrades das ermittelte spezifische Erkennungsmuster des zu identifizierenden Schienenfahrzeugrades mit einem oder mehreren bereits gespeicherten oder vorgegebenen referenz-spezifischen Erkennungsmuster(n) von Schienenfahrzeugrädern verglichen.

Dabei ist es zweckmäßig, wenn das eine oder die mehreren vorgegebenen referenz-spezifischen Erkennungsmuster bezüglich der Parameter oder Kennwerte gleichartig zu dem ermittelten spezifischen Erkennungsmuster ist bzw. sind ("Vergleich von Äpfeln mit Äpfeln, nicht Äpfeln mit Birnen").

Das bzw. die vorgegebenen referenz-spezifischen Erkennungsmuster können dabei auch in einer Datenbank gespeichert sein bzw. gespeichert werden.

Zweckmäßig ist bei dem Verfahren und der Anordnung zum Wiedererkennen eines Schienenfahrzeugrades auch, wenn das bzw. die referenz-spezifische Erkennungsmuster, insbesondere mit dem ermittelten spezifischen Erkennungsmuster des zu identifizierenden Schienenfahrzeugrades, aktualisiert wird/werden. Dies bedeutet, dass das gespeicherte referenz-spezifische Erkennungsmuster nach dem Wiederkennen eines Schienenfahrzeugrades mit dessen aktuellen spezifischen Erkennungsmuster verglichen und bei möglichen zeitlich bedingten Abweichungen bezüglich der Parameter oder Kennwerte aktualisiert wird.

Anders bzw. anordnungsseitig ausgedrückt, die Anordnung kann zweckmäßigerweise eine Datenbank vorsehen, in welcher die referenz-spezifischen Erkennungsmuster gespeichert sind und/oder aktualisiert werden.

Durch den Vergleich - von ermittelten spezifischen Erkennungsmustern des zu identifizierenden Schienenfahrzeugrades mit einem oder mehreren vorgegebenen referenz-spezifischen Erkennungsmustern von Schienenfahrzeugrädern - wird dann bei dem Verfahren zum Wiedererkennen eines Schienenfahrzeugrades das zu identifizierende Schienenfahrzeugrad aufgefunden.

Bei dem Vergleich kann eine Abweichung/Toleranz zugelassen bzw. berücksichtigt werden, um so das Wiedererkennen trotz zufälliger Ungenauigkeiten/Abweichungen zu ermöglichen.

Dem Verfahren und der Anordnung zum Wiedererkennen eines Schienenfahrzeugrades liegen die Erkenntnis zugrunde, dass Schienenfahrzeugräder nie bzw. selten exakt gleiche Abnutzungserscheinungen zeigen - und ein bestimmtes Schienenfahrzeugrad seine Eigenschaften über seine Laufleistung in der Regel nur langsam ändert. D. h., jedes Schienenfahrzeugrad besitzt/birgt radspezifische bzw. radimmanente bzw. über die Laufleistung nahezu unveränderliche Eigenschaften in sich.

Beobachtungen haben gezeigt, dass sich das Überrollsignal von ein und demselben Schienenfahrzeugrad - über seine Laufleistung - erstaunlich gut wiederholt. Ein über die Laufleistung eines Schienenfahrzeugrades mehrmals gemessenes Überrollsignal mag sich so in den absoluten Amplitudenhöhen ändern, die Höhe benachbarter Amplituden weisen allerdings reproduzierbare Verhältnisse auf. Anschaulich und einfach ausgedrückt, Imperfektionen eines Schienenfahrzeugrades bleiben, wo sie sind, ändern sich nur in ihrer Ausgeprägtheit.

Kurz, das Überrollsignal eines Schienenfahrzeugrades ist bzw. wird spezifisch für dieses Schienenfahrzeugrad bleiben.

Das Verfahren und die Anordnung zum Wiedererkennen eines Schienenfahrzeugrades nutzen nun diese Erkenntnis/Beobachtung dadurch, dass es bzw. sie - aus dem Überrollsignal eines Schienenfahrzeugrades - ein spezifisches Erkennungsmuster des zu identifizierenden Schienenfahrzeugrades bzw. einen oder mehrere zeitunabhängige Identifikationsparameter/-kennwerte - quasi einen Fingerabdruck - für das Schienenfahrzeugrad generiert.

Hierbei berücksichtigen das Verfahren und die Anordnung zum Wiedererkennen eines Schienenfahrzeugrades aber den Umstand, dass das Überrollsignal - als zeitliches, beim Überrollen des Schienenfahrzeugrades über eine Belastungs-Messeinrichtung bzw. ein Überwachungssystem (an einer Schiene) gemessenes Signal - abhängig von der (jeweiligen) Überrollgeschwindigkeit des Schienenfahrzeuges bzw. Schienenfahrzeugrades über die Belastungs-Messeinrichtung/das Überwachungssystem (an der Schiene) ist - , was die unmittelbare Vergleichbarkeit von Überrollsignalen erschwert bzw. verkompliziert.

Das Verfahren und die Anordnung zum Wiedererkennen eines Schienenfahrzeugrades bilden so - aus dem Überrollsignal - zeitunabhängige Parameter-/Kennwerte, d. h. den oder die mehreren zeitunabhängigen Identifikationsparameter/- kennwerte, - welcher bzw. welche dann den Schienenfahrzeugrad-spezifischen Fingerabdruck bildet/bilden.

Dieser Fingerabdruck eines bestimmten Schienenfahrzeugrades erlaubt dann die (eindeutige) Identifikation dieses Schienenfahrzeugrades. Darüber hinaus kann ebenfalls das Schienenfahrzeug über seine wiedererkannten Schienenfahrzeugräderidentifiziert und erkannt werden. Wie zuvor beschrieben ist der Fingerabdruck eines Schienenfahrzeugrades individuell und bleibt über die Laufleistung des Schienenfahrzeugrades spezifisch.

Somit kann durch das Verfahren und die Anordnung zum Wiedererkennen eines Schienenfahrzeugrades - bei der Schienenverkehrs- bzw. -fahrzeugüberwachung - auf ein zusätzliches Lese-/Identifikationssystem bei dem Schienenfahrzeug, beispielsweise Genannte auf Basis von Nummernkennungen und/oder RFID, welches (zusätzliche) Lese-/Identifikationssystem insbesondere mit dem Überwachungssystem bzw. der Belastungs-Messeinrichtung unmittelbar oder mittelbar kommunizieren können muss, verzichtet werden.

Bei dem Verfahren und der Anordnung zum Wiedererkennen eines Schienenfahrzeugrades identifizieren sich - vereinfacht und anschaulich ausgedrückt - das Schienenfahrzeugrad und darüber dann das Schienenfahrzeug über seine wiedererkannten Schienenfahrzeugräder - alleine "aus sich heraus" anhand "seiner" durch das Überwachungssystem bzw. die Belastungs-Messeinrichtung gelieferten Daten. Darüberhinausgehende, durch andere weitere bzw. zusätzliche Systeme zu ermittelnde Daten (und die Systeme) sind für die Identifikation bzw. Schienenverkehrs-/Schienenfahrzeugüberwachung bei dem Verfahren und der Anordnung zum Wiedererkennen eines Schienenfahrzeugrades nicht (mehr) notwendig. Zweckmäßig, weil dadurch die Identifikationssicherheit beim Auffinden und Wiedererkenn des Schienenfahrzeugrades weiter erhöht werden kann, ist es auch, wenn das spezifische Erkennungsmuster zusätzlich mindestens einen weiteren unter Verwendung eines weiteren Messsignals ermittelten zeitunabhängigen Identifikationsparameter/-kennwert umfasst.

Dieser zusätzlich mindestens ein weiterer Identifikationsparameter/-kennwert kann dabei zweckmäßigerweise ein Verschleißmaß aus einem Querprofil eines Schienenfahrzeugrades, insbesondere eine Spurkranzdicke, eine Spurkranzhöhe und/oder ein Flankenwinkel, sein. Entsprechende - gegebenenfalls auch mobile - Messeinrichtungen dazu, wie Eisenbahn-Werkstätten-Fertigungsmittel der Deutschen Bundesbahn Systemtechnik, beispielsweise zur Messung einer Spurkranzdicke, einer Spurkranzhöhe oder Radreifen-/Radkranzdicken, können - anordnungsseitig - vorgesehen sein.

Bevorzugt kann das Verfahren und die Anordnung zum Wiedererkennen eines Schienenfahrzeugrades auch zu einer Trendverfolgung einer physikalischen Größe bei dem zu identifizierenden Schienenfahrzeugrades, beispielsweise einem Radprofil, einer (Position und/oder einer Größe einer) Imperfektion und/oder einer Flachstelle/Unrundheit bei dem Schienenfahrzeugrad, eingesetzt werden, wobei das spezifische Erkennungsmuster des zu identifizierenden Schienenfahrzeugrades (dann) mehrmals ermittelt und verglichen wird.

Kann darüber das Schienenfahrzeugrad als - jeweils das gleiche/selbe - Schienenfahrzeugrad identifiziert werden, so können nun diesem Schienenfahrzeugrad zuordenbare Belastungsmessungen bzw. diesbezügliche Analysen, welche die genannten physikalischen Größen, wie Radprofilgrößen, Positionen/Größen von Imperfektionen und/oder Flachstellen/Unrundheiten, liefern die Trendverfolgung begründen.

Hierdurch kann so beispielsweise der Trend bei einer Schadensentwicklung bzw. die Schadensentwicklung an einem Schienenfahrzeugrad, beispielsweise die Verlaufsentwicklung einer Imperfektion am Schienenfahrzeugrad, beobachtet und so ein diesbezügliches Condition-Monitoring betrieben werden, ohne dass dazu das Schienenfahrzeug zeit- und kostenaufwändig eine Werkstatt aufsuchen muss. Zudem müsste in einer Werkstatt zunächst ebenfalls mit Hilfe dort vorhandener Lese-/Identifizierungssysteme die Identifizierung des Schienenfahrzeugs, beispielsweise auf Basis von den Nummernkennungen und/oder den RFID, erfolgen.

Besonders bevorzugt lässt sich das Verfahren und die Anordnung zum Wiedererkennen eines Schienenfahrzeugrades zur Ermittlung eines Radschadens einsetzen, wobei nach mehrmaligem Wiedererkennen, und Vergleich bzw. mehrmaliger Identifizierung der Trends und/oder die Entwicklung eines Radschadens an dem zu identifizierenden bzw. identifizierten Schienenfahrzeugrad beobachtet/verfolgt wird/werden und/oder der Radschaden an dem zu identifizierenden bzw. identifizierten Schienenfahrzeugrad, überschreitet die Größe des Radschadens einen vorgebbaren Grenzwert, als Radschaden klassifiziert und/oder erkannt wird.

Zweckmäßig kann es hierbei - bei einer solchen Trendverfolgung/einem solchen Condition-Monitoring bzw. mehrmaligem Vergleich und Identifikation - insbesondere sein, das entsprechende referenz-spezifischen Erkennungsmuster, welches beim (aktuellen) Vergleich zur Identifizierung "führt", jeweils durch das (aktuell) ermittelte spezifische Erkennungsmuster zu aktualisieren.

Bevorzugt kann das Verfahren und die Anordnung zum Wiedererkennen eines Schienenfahrzeugrades zum Wiedererkennen einer Achse des Schienenfahrzeugs, eines Drehgestells des Schienenfahrzeugs und/oder des Schienenfahrzeugs eingesetzt werden, wobei die spezifischen Erkennungsmuster mehrerer zu identifizierender Schienenfahrzeugräder, insbesondere von einer Achse des Schienenfahrzeugs, von einem Drehgestell des Schienenfahrzeugs und/oder des Schienenfahrzeugs, dann kombiniert werden.

Für den "Identifikations-Vergleich" mit dem einen oder den mehreren referenz-spezifischen Erkennungsmustern können auch dort entsprechende Kombinationen aus den einen oder den mehreren referenz-spezifischen Erkennungsmustern gebildet werden.

Anders ausgedrückt, für das spezifische Erkennungsmuster bzw. den Fingerabdruck einer Schienenfahrzeugachse werden die spezifischen Erkennungsmuster der beiden an der Achse einander gegenüberliegenden Schienenfahrzeugräder kombiniert.

Entsprechend für ein Schienenfahrzeugdrehgestell, für das spezifische Erkennungsmuster bzw. den Fingerabdruck eines Schienenfahrzeugdrehgestells werden die spezifischen Erkennungsmuster der an diesem Schienenfahrzeugdrehgestell befindlichen Schienenfahrzeugräder kombiniert.

Entsprechend für ein Schienenfahrzeug, für das spezifische Erkennungsmuster bzw. den Fingerabdruck eines Schienenfahrzeugs werden die spezifischen Erkennungsmuster der an diesem Schienenfahrzeug befindlichen Schienenfahrzeugräder oder Drehgestelle kombiniert.

Die ermittelten, kombinierten spezifischen Erkennungsmuster bzw. Fingerabdrücke können dann mit entsprechenden Kombinationen von referenz-spezifischen Erkennungsmustern verglichen werden.

Dabei können - bei den jeweiligen Vergleichen zur Identifizierung - auch Abweichungen/Toleranzen berücksichtigt werden. So kann es dabei insbesondere zweckmäßig sein, die Toleranzen, um ein Schienenfahrzeug oder ein Schienenfahrzeugdrehgestell oder eine Schienenfahrzeugachse wiederzuerkennen, höher anzusetzen als für individuelle Schienenfahrzeugräder.

Ferner kann es auch zweckmäßig sein, bei der Kombination der spezifischen Erkennungsmuster bzw. Fingerabdrücke der Schienenfahrzeugräder zu Schienenfahrzeugachsen/-drehgestellen/-en eine Position des zu identifizierenden Schienenfahrzeugrades an der Schienenfahrzeugachse bzw. am Schienenfahrzeugdrehgestell bzw. im Schienenfahrzeug, beispielsweise "vorne"/"hinten" bzw. "links"/"rechts" bzw. "vorne links"/"vorne rechts"/"hinten links"/"hinten rechts", zu berücksichtigen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Anordnung kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert wird/werden (gleiche Bauteile/Komponenten und Funktionen weisen in den Zeichnungen/Figuren gleiche Bezugszeichen auf). Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: schematisch die Überwachung eines Schienenverkehrs bzw. eines Schienenfahrzeugs mittels eines für das Schienenfahrzeug gebildeten digitalen Fingerabdrucks;
- FIG 2: zu unterschiedlichen Zeitpunkten von einem Schienenfahrzeugrad beim Überrollen einer an einer Schiene angeordneten Belastungs-Messeinrichtung generiertes Überrollsignal über den Schienenfahrzeugradumfang.

### Digitaler Fingerabdruck 5 zum Wiedererkennen 100 von Schienenfahrzeugrädern 1

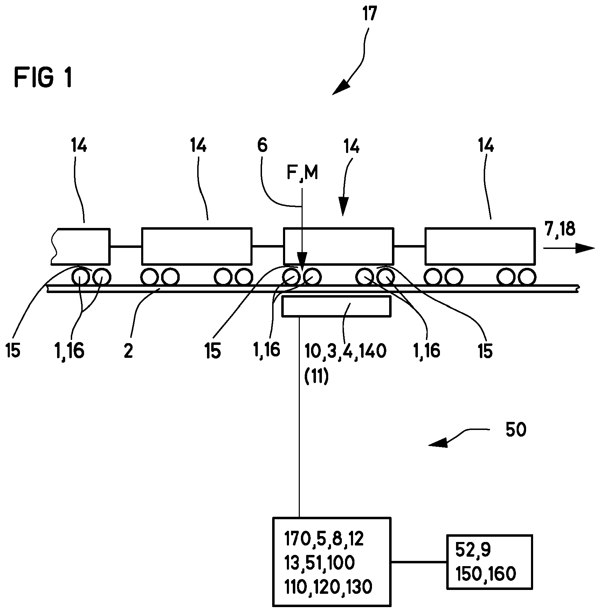

FIG 1 zeigt einen Teil eines Schienenfahrzeugverbunds 17 aus mehreren Schienenfahrzeugen 14 (wie Güter- und/oder Personenwagen) (kurz nur Zug 17), welcher sich (wie FIG 1 verdeutlicht) in einem Fahrbetrieb 18 befindet, bei welchem er in einem Schienennetz (aus nebeneinander angeordnete Schienen 2 aufweisenden Gleisen) verkehrt und dabei (wie FIG 1 auch verdeutlicht) eine Schiene 2 (aus dem Schienennetz) - vielfach - überfährt.

Jedes Schienenfahrzeug 14 weist ein - vorderes und hinteres - zweiachsiges Drehgestell 15 auf, deren jede Achse 16 ein linkes und ein rechtes Schienenfahrzeugrad 1 trägt.

Die - hier dann von dem Zug 17 bzw. den Schienenfahrzeugen 14 überfahrene - Schiene 2 ist, wie FIG 1 zeigt, mit einem stationären Überwachungssystem 3, in diesem Fall mit dem "MULTIRAIL WheelScan", ausgestattet, welches auf die Schiene 2 wirkende Schienenbelastungen 6 durch den Zug 17/das Schienenfahrzeug 14 bzw. durch dessen Schienenfahrzeugräder 1 (bei Überfahrt, d. h. im Fahrbetrieb 18, bzw. beim Überrollen 7) ermittelt.

Das Überwachungssystem 3 "MULTIRAIL WheelScan" stellt eine in eine Schiene, d. h. hier in die Schiene 2, integrierte Messstrecke 10 mit einer bzw. gebildet durch eine mit Messsensoren oder Wägezellen ausgestattete Mess-Betonschwelle 3 (Wägeschwelle) dar, deren Messsensoren, insbesondere Kraftsensoren (und/oder Momentensensoren), die Schienenbelastungen 6, d. h. (Vertikal-)Kräfte F (und Momente M), - infolge von Spurführungskräften und Gewichtskräften auf die Schiene 2 - messen.

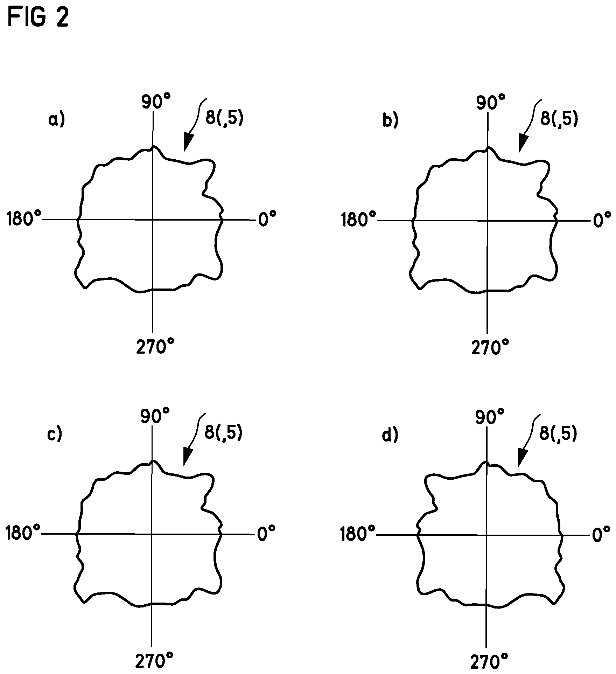

D. h., das stationäre Überwachungssystem 3 bzw. "MULTIRAIL WheelScan" misst 140 so ein - zeit- bzw. geschwindigkeitsabhängiges - Überrollsignal 4 (hier beispielsweise die vertikale Aufstandskraft F) für ein es überrollendes 7 Schienenfahrzeugrad 1 eines Schienenfahrzeugs 14 des Zuges 17 (vgl. FIG 2).

Wie FIG 1 weiter auch zeigt, ist das stationäre Überwachungssystem 3 bzw. "MULTIRAIL WheelScan" mit einer Rechenanlage/Computer 51 (Ermittlungseinheit 51) verbunden, welche ihrerseits eine Datenbank 52 aufweist (beides zusammen im Folgenden "MULTIRAIL WheelScan" oder Überwachungssystem 3).

Wie FIG 1 auch verdeutlicht, werden - in diesem Fall - die durch "MULTIRAIL WheelScan"- für den Zug 17 gemessenen Belastungen 6, d. h. die Überrollsignale 4 der Schienenfahrzeugräder 1 an die Rechenanlage/Computer 51 (Ermittlungseinheit 51) übertragen, wo eine Auswertung, beispielsweise eine Rad-Diagnose (Erkennung von Rad-Imperfektionen, wie Flachstellen, Rauheiten oder Unrundheiten), eine Waggonerkennung, eine Streckenlastkontrolle und eine Beladungsregelung, derselben erfolgt.

Dieses wird nun ergänzt mit einer Trendverfolgung bzw. einem Condition-Monitoring 170 an/von Schienenfahrzeugen 14 (im Rahmen der Überwachung des Schienenverkehrs bzw. eines Schienenfahrzeugs 14), um dabei eine Schadensentwicklung an dem Schienenfahrzeug 14, hier im Speziellen an einem Schienenfahrzeugrad 1 eines Schienenfahrzeugs 14, beobachten/feststellen bzw. verfolgen zu können. Im Zuge der vorbeugenden Instandhaltung kann über die Trendverfolgung des spezifischen Erkennungsmusters oder des digitalen Fingerabdrucks bzw. der damit einhergehenden Kennwerte und Parameter ein Radschaden erkannt und somit ein Radausfall vermieden werden.

Für diese Trendverfolgung bzw. dieses Condition-Monitoring 170 an/von Schienenfahrzeugen 14 bzw. für die Beobachtung/Feststellung/Verfolgung einer Schadensentwicklung an einem Schienenfahrzeugrad 1 eines Schienenfahrzeugs 14 durch "MULTIRAIL WheelScan", ist es notwendig, die (mehrfach zu unterschiedliche Zeitpunkten an der Messstrecke 10 bzw. mit "MULTIRAIL WheelScan" gemessenen) Überrollsignale 4 (und darüber dann auch die durch "MULTIRAIL WheelScan" durchgeführten, zugehörigen Auswertungen, wie die Rad-Diagnose (Erkennung von Rad-Imperfektionen, wie Flachstellen, Rauheiten oder Unrundheiten)) einem bestimmten Schienenfahrzeugrad 1 eines bestimmten Schienenfahrzeuges 14 zuordnen zu können.

D. h., eine Identifikation eines Schienenfahrzeugrades 1 ist notwendig bzw. Voraussetzung für die Schadens-Trendverfolgung/das Schadens-Conditon-Monitoring 170.

Diese Identifikation 100 erfolgt, wie FIG 1 verdeutlicht, "system-immanent", d. h. aus "Vorhandenem" heraus, d. h. auf Basis der Überrollsignale 4 der Schienenfahrzeugräder 1, ohne dass es zusätzliche Systeme (wie beispielsweise Nummernkennungen/RFID mit entsprechenden Lese-/Identifikationssystemen) bedarf.

Dazu werden in der Ermittlungseinheit 51 von "MULTIRAIL WheelScan" aus einem für ein Schienenfahrzeugrad 1 gemessenen Überrollsignal 4 zeitunabhängige Identifikationsparameter/-kennwerte 8 gebildet/ermittelt, welche zu einem - für dieses Schienenfahrzeugrad 1 spezifischen - Erkennungsmuster 5, d.h. einem digitalen Fingerabdruck 5 für dieses Schienenfahrzeugrad 1, kombiniert werden 110. Dieses Erkennungsmuster 5 bzw. dieser digitale Fingerabdruck erlauben nachträglich eine eindeutige Identifizierung 100 des Schienenfahrzeugrades 1.

Als aus dem Überrollsignal 4 gebildete, zu dem Fingerabdruck 5 kombinierte, zeitunabhängige Identifikationsparameter/-kennwerte 8 werden in diesem Fall (a) der Radumfang des Schienenfahrzeugrades, (b) eine periodische Unrundheit des Schienenfahrzeugrades, (c) der Belastungsverlauf, d. h. die Vertikalkraft/vertikale Aufstandskraft F, in Abhängigkeit des Radwinkels und (d) das Wellenlängenspektrum des Belastungsverlaufs, d. h. der Vertikalkraft/vertikalen Aufstandskraft F, verwendet.

D.h., aus dem Überrollsignal 4 bzw. der vertikalen Aufstandskraft F eines (zu identifizierenden) Schienenfahrzeugrades 1 wird (a) der Radumfang des Schienenfahrzeugrades, (b) die periodische Unrundheit des Schienenfahrzeugrades, (c) der Belastungsverlauf, d. h. die Vertikalkraft/vertikale Aufstandskraft F, in Abhängigkeit des Radwinkels und (d) das Wellenlängenspektrum des Belastungsverlaufs, d. h. der Vertikalkraft/vertikalen Aufstandskraft F, berechnet.

Kennwerte 8 (a) bis (d) werden dann zu dem - für das zu identifizierende Schienenfahrzeugrad 1 spezifischen - Fingerabdruck 5 zusammengefasst bzw. kombiniert.

Ist so für ein Schienenfahrzeugrad 1 dessen digitaler Fingerabdruck 5 (zu diesem gehört dann das diesbezüglich von "MULTIRAIL WheelScan" gemessene Überrollsignal 4 sowie die von "MULTIRAIL WheelScan" zugehörigen Auswertungen, wie auch die Rad-Diagnose (Rad-Imperfektionen, Flachstellen, Rauheiten und Unrundheiten)) ermittelt 110, wird dieser beispielsweise mittels der Ermittlungseinheit 51 mit in der Datenbank 52 gespeicherten (gleichermaßen gebildete) Referenz-Fingerabdrücken 9 von bereits "be-/erkannten" bzw. "erfassten" Schienenfahrzeugrädern verglichen 120.

D. h., in der Datenbank 52 sind eine Vielzahl von Referenz-Fingerabdrücken 9 - zusammen mit den jeweiligen "MULTIRAIL WheelScan" Auswertungen (u. a. die diesbezügliche, zugehörige Rad-Diagnose (Rad-Imperfektionen, Flachstellen, Rauheiten und Unrundheiten)) - gespeichert.

Liefert der Vergleich 120 von aktuell ermitteltem Fingerabdruck 5 und Referenz-Fingerabdrücken 9 einen "Treffer", d.h., hier stimmt der aktuell ermittelte Fingerabdruck 5 mit einem der gespeicherten Referenz-Fingerabdrücke 9 überein -ggfl. unter Berücksichtigung von Toleranzen-, so ist das - zu identifizierende - Schienenfahrzeugrad 1 identifiziert 130.

Der Vergleich zwischen den "MULTIRAIL WheelScan" Auswertungen des aktuell ermittelten Fingerabdrucks 5 mit denen des "Treffer-Fingerabdrucks" 9 gibt dann Aufschluss über eine Zustands-/Schadensentwicklung, beispielsweise die Entwicklung/Veränderung der Rad-Imperfektionen, Flachstellen, Rauheiten und Unrundheiten an diesem - jetzt identifizierten - Schienenfahrzeugrad 1 (Trendverfolgung/Condition-Monitoring 170).

Parallel dazu wird die Datenbank aktualisiert 160, das heißt, dort wird der gespeicherte "Treffer-Fingerabdruck" 9 und dessen gespeicherte "MULTIRAIL WheelScan" Auswertungen durch den aktuellen Fingerabdruck 5 des wiedererkannten oder identifizierten Schienenfahrzeugrades 1 und dessen aktuellen "MULTIRAIL WheelScan" Auswertungen des wiedererkannten oder identifizierten Schienenfahrzeugrades 1 ersetzt.

FIG 2 zeigt exemplarisch den zeitunabhängigen Identifikationsparameter/-kennwert 8 (c), d. h. den Belastungsverlauf, d. h. die Vertikalkraft/vertikale Aufstandskraft F, in Abhängigkeit des Radwinkels, für ein und dasselbe Schienenfahrzeugrad 1 zu vier unterschiedlichen Zeitpunkten.

Das heißt, hier wurde - an/zu vier unterschiedlichen Zeitpunkten (FIG 2a bis 2d) (und einmal davon auch in umgekehrter Überroll-Richtung (FIG 2d)) - "MULTIRAIL WheelScan" von ein und demselben Schienenfahrzeugrad überrollt 7, wobei jedes Mal der digitale Fingerabdruck 5 - und so auch der zeitunabhängige Identifikationsparameter/-kennwert 8 (c), d. h. der Belastungsverlauf, d. h. die Vertikalkraft/vertikale Aufstandskraft F, in Abhängigkeit des Radwinkels, bestimmt wurde. (FIG 2a bis 2d) Über die Identifizierung 100 des Schienenfahrzeugrades 1 konnten so die vier Belastungsverläufe wiedererkannt und einander als diesem Schienenfahrzeugrad 1 zugehörig zugeordnet werden.

Wie FIG 2a bis 2d zeigt, sind die vier Belastungsverläufe im Wesentlichen identisch - berücksichtigt man bei FIG 2d den umgekehrten Umlaufsinn, welcher sich durch das Überrollen 7 in umgekehrter Überroll-Richtung ergibt.

Derartige mit "MULTIRAIL WheelScan" (inkl. der Rechenanlage/Computer 51 (Ermittlungseinheit 51)) ausgestatte Messstrecken 10 können auch mehrfach im Schienennetz angeordnet sein - und messen (und analysieren und identifizieren) so mehrfach - an verschiedenen Stellen im Schienennetz - die Überrollsignale 4 von Schienenfahrzeugrädern 1 bei ihrem Überrollen 7.

Sind diese miteinander vernetzt, wobei ein ständiger Abgleich der Datenbanken 52 erfolgt, so kann dadurch die Trendverfolgung bzw. das Condition-Monitoring 170 auch "örtlich" erweitert werden.

In entsprechender Weise, wie das Wiedererkennen oder die Identifikation 100 eines Schienenfahrzeugrades 1, kann auch eine Identifikation einer Achse 16 des Schienenfahrzeugs 14, eines Drehgestells 15 des Schienenfahrzeugs 14 und/oder des Schienenfahrzeugs 14 erfolgen, wobei hier dann die digitalen Fingerabdrücke 5 mehrerer zu identifizierender Schienenfahrzeugräder 1, d. h. von einer Achse 16 des Schienenfahrzeugs 14, von einem Drehgestell 15 des Schienenfahrzeugs 14 und/oder des Schienenfahrzeugs 14, kombiniert werden.

Für das Wiedererkennen oder den "Identifikations-Vergleich" mit dem einen oder den mehreren referenz-spezifischen Fingerabdrücken 9 werden dann auch in der Datenbank 52 entsprechende Kombinationen aus den einen oder den mehreren Referenz-Fingerabdrücken 9 gebildet.

Der Vergleich 120 selbst erfolgt dann wie gehabt - zwischen aktuellen Fingerabdruck 5 und Referenz-Fingerabdrücken 9.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste

- 1: (Zu identifizierendes) Schienenfahrzeugrad
- 2: Schiene
- 3: Belastungs-Messeinrichtung, (stationäres) Überwachungssystem, Messschiene, Messschwelle
- 4: Überrollsignal
- 5: (ermitteltes) spezifisches Erkennungsmuster, digitaler Fingerabdruck
- 6: Schienenbelastung (F, M), Vertikalkraft F, Moment M
- 7: Überrollen
- 8: zeitunabhängiger Identifikationsparameter/-kennwert
- 9: vorgegebenes referenz-spezifisches Erkennungsmuster, digitaler Fingerabdruck
- 10: Messstrecke

- 11: weiteres Messsignal
- 12: weiterer zeitunabhängiger Identifikationsparameter/-kennwert
- 13: physikalische Größe
- 14: Schienenfahrzeug
- 15: Schienenfahrzeugdrehgestell
- 16: Schienenfahrzeugachse
- 17: Schienenfahrzeugverbund, Zug
- 18: Fahrbetrieb

- 50: Anordnung zum Wiedererkennen eines Schienenfahrzeugrades
- 51: Ermittlungseinheit, Rechenanlage/Computer
- 52: Datenbank

- 100: Verfahren zum Wiedererkennen eines Schienenfahrzeugrades
- 110: Ermittlung eines spezifischen Erkennungsmusters des zu identifizierenden Schienenfahrzeugrades
- 120: Vergleich des ermittelten spezifischen Erkennungsmusters des zu identifizierenden Schienenfahrzeugrades mit einem oder mehreren vorgegebenen referenz-spezifischen Erkennungsmustern von Schienenfahrzeugrädern
- 130: Identifikation des zu identifizierenden Schienenfahrzeugrades
- 140: Ermittlung des Überrollsignals
- 150: Speicherung (in einer Datenbank)
- 160: Aktualisierung
- 170: Trendverfolgung, Condition-Monitoring

## Patentansprüche

1. Verfahren (100) zum Wiedererkennen eines Schienenfahrzeugrades (1) wobei
- unter Verwendung eines mittels einer an einer Schiene (2) angeordneten Belastungs-Messeinrichtung (3) ermittelten Überrollsignals (4) von einem Schienenfahrzeugrad (1) ein spezifisches Erkennungsmuster (5) ermittelt wird (110),
wobei das Überrollsignal (4) einen zeitlichen Verlauf einer durch das Schienenfahrzeugrad (1) auf die mit der Belastungs-Messeinrichtung (3) ausgestatteten Schiene (2) bewirkte Schienenbelastung (6) beim Überrollen (7) beschreibt,
und wobei das spezifische Erkennungsmuster (5) einen oder mehrere jeweils unter Verwendung des Überrollsignals (4) ermittelte zeitunabhängige Identifikationsparameter/-kennwerte (8) umfasst,
- das ermittelte spezifische Erkennungsmuster (5) des Schienenfahrzeugrades (1) mit einem oder mehreren referenz-spezifischen Erkennungsmustern (9) von Schienenfahrzeugrädern (1) verglichen wird (120) und
- durch den Vergleich (120) das Schienenfahrzeugrad (1) wiedererkannt wird (130).

2. Verfahren (100) zum Wiedererkennen eines Schienenfahrzeugrades (1) nach mindestens einem der voranstehenden Ansprüche wobei das Überrollsignal (4) mittels der Belastungs-Messeinrichtung (3) ermittelt wird (140), insbesondere mittels einer Messstrecke (10), die eine Messschiene (3) oder eine Messschwelle (3) umfasst, wenn das Schienenfahrzeugrad (1) die mit der Belastungs-Messeinrichtung (3) ausgestattete Schiene (2) überrollt (7).

3. Verfahren (100) zum Wiedererkennen eines Schienenfahrzeugrades (1) nach mindestens einem der voranstehenden Ansprüche wobei das Überrollsignal (4) ein Kraft-, Momenten- und/oder Beschleunigungssignal ist.

4. Verfahren (100) zum Wiedererkennen eines Schienenfahrzeugrades (1) nach mindestens einem der voranstehenden Ansprüche wobei der zeitunabhängige Identifikationsparameter/-kennwert (8)
- ein Radumfang, eine Imperfektion, insbesondere eine Flachstelle, eine Rauheit oder eine Unrundheit, insbesondere eine periodische Unrundheit, und/oder
- ein Belastungsverlauf in Abhängigkeit eines Radwinkels oder eines Radumfangs, insbesondere ein phasenbereinigter und/oder normierter Belastungsverlauf, und/oder
- ein Frequenzspektrum, ein Wellenlängenspektrum oder deren Amplitudenverhältnisse eines Belastungsverlaufs ist.

5. Verfahren (100) zum Wiedererkennen eines Schienenfahrzeugrades (1) nach mindestens einem der voranstehenden Ansprüche wobei das spezifische Erkennungsmuster (5) zusätzlich mindestens einen weiteren unter Verwendung eines weiteren Messsignals (11) ermittelten zeitunabhängigen Identifikationsparameter/-kennwert (12) umfasst.

6. Verfahren (100) zum Wiedererkennen eines Schienenfahrzeugrades (1) nach dem voranstehenden Anspruch wobei der weitere Identifikationsparameter/-kennwert (12) ein Verschleißmaß aus einem Querprofil eines Schienenfahrzeugrades (1), insbesondere eine Spurkranzdicke, eine Spurkranzhöhe und/oder ein Flankenwinkel, ist.

7. Verfahren (100) zum Wiedererkennen eines Schienenfahrzeugrades (1) nach mindestens einem der voranstehenden Ansprüche wobei das oder die vorgegebenen referenz-spezifischen Erkennungsmuster (9) in einer Datenbank (52) gespeichert ist/sind oder werden (150) und/oder das oder die referenz-spezifische Erkennungsmuster (9), insbesondere mit dem ermittelten spezifischen Erkennungsmuster (5) des zu identifizierenden Schienenfahrzeugrades (1), insbesondere in der Datenbank (52), aktualisiert wird/werden (160).

8. Verfahren (100) zum Wiedererkennen eines Schienenfahrzeugrades (1) nach mindestens einem der voranstehenden Ansprüche wobei bei dem Vergleich (120) eine Abweichung/Toleranz zugelassen bzw. berücksichtigt wird.

9. Verfahren (100) zum Wiedererkennen eines Schienenfahrzeugrades (1) nach mindestens einem der voranstehenden Ansprüche,
**eingesetzt**
zu einer Trendverfolgung (170) einer physikalischen Größe (13) des Schienenfahrzeugrads (1), wobei das spezifische Erkennungsmuster (5) des Schienenfahrzeugrades (1) mehrmals ermittelt und verglichen wird.

10. Verfahren (100) zum Wiedererkennen eines Schienenfahrzeugrades (1) nach Anspruch 9,
**eingesetzt**
zur vorbeugenden Instandhaltung, wobei unter Verwendung des Trends und/oder des mehrmaligen Vergleichs (120) ein Radschaden an dem zu identifizierenden bzw. identifizierten Schienenfahrzeugrad (1) erkannt wird.

11. Verfahren (100) zum Wiedererkennen eines Schienenfahrzeugrades (1) nach mindestens einem der Ansprüche 1 bis 8,**eingesetzt**
zum Wiedererkennen einer Achse (16) eines Schienenfahrzeugs (14), eines Drehgestells (15) des Schienenfahrzeugs (14) und/oder des Schienenfahrzeugs (14), wobei die spezifischen Erkennungsmuster (5) mehrerer zu identifizierender Schienenfahrzeugräder (1), insbesondere von einer Achse (16) des Schienenfahrzeugs (14), von einem Drehgestell (15) des Schienenfahrzeugs (14) und/oder des Schienenfahrzeugs (14), kombiniert werden.

12. Verfahren (100) zum Wiedererkennen eines Schienenfahrzeugrades (1) nach Anspruch 11,
**wobei**
bei der Kombination eine Position des zu identifizierenden Schienenfahrzeugrades (1) im Schienenfahrzeug (14) berücksichtigt wird.

13. Anordnung (50) zum Wiedererkennen eines Schienenfahrzeugrades (1) mit einer Ermittlungseinheit (51), wobei die Ermittlungseinheit (51) eingerichtet ist zur Durchführung des Verfahrens (100) zum Wiedererkennen eines Schienenfahrzeugrades (1) nach einem der voranstehenden Ansprüche 1 bis 8.

14. Anordnung (50) zum Wiedererkennen eines Schienenfahrzeugrades (1) nach Anspruch 13, umfassend eine Belastungs-Messeinrichtung (3), insbesondere eine Messstrecke (10) mit einer Messschiene (3) oder einer Messschwelle (3), welche eingerichtet ist zur Ermittlung (140) des Überrollsignals (4).

15. Anordnung (50) zum Wiedererkennen eines Schienenfahrzeugrades (1) nach Anspruch 13 oder 14, umfassend eine Datenbank (52), in welcher das oder die referenz-spezifischen Erkennungsmuster (9) gespeichert sind.

## Claims

1. A method (100) for identifying a rail vehicle wheel (1)
wherein
- a specific detection pattern (5) of the rail vehicle wheel (1) is ascertained (110) using a rollover signal (4) of the vehicle wheel (1) ascertained with the aid of a load measuring device (3) arranged on a rail (2),
the rollover signal (4) describing a time characteristic of a rail load (6) induced by the rail vehicle wheel (1) on the rail (2) equipped with the load-measuring device (3) during the rollover (7),
and the specific detection pattern (5) comprising one or multiple time-independent identification parameter(s) / characteristic value(s) (8) ascertained using the rollover signal (4);
- the ascertained specific detection pattern (5) of the rail vehicle wheel (1) is compared (120) with one or multiple reference-specific detection patterns (9) of rail vehicle wheels (1); and
- the rail vehicle wheel (1) is identified (130) by the comparison (120).

2. The method (100) for identifying a rail vehicle wheel (1) according to at least one of the preceding claims
wherein
the rollover signal (4) is ascertained (140) with the aid of the load-measuring device (3), in particular with the aid of a measuring section (10) which comprises a measuring rail (3) or a measuring tie (3), when the rail vehicle wheel (1) rolls over (7) the rail (2) equipped with the load-measuring device (3).

3. The method (100) for identifying a rail vehicle wheel (1) according to at least one of the preceding claims
wherein
the rollover signal (4) is a force, torque and / or acceleration signal.

4. The method (100) for identifying a rail vehicle wheel (1) according to at least one of the preceding claims
wherein
the time-independent identification parameter / characteristic value (8) is
- a wheel circumference, an imperfection, in particular a flat spot, a roughness or an out-of-roundness, in particular a periodic out-of-roundness, and / or
- a load pattern as a function of a wheel angle or a wheel circumference, in particular a phase-adjusted and / or standardized load pattern, and / or
- a frequency spectrum, a wavelength spectrum or their amplitude ratio of a load pattern.

5. The method (100) for identifying a rail vehicle wheel (1) according to at least one of the preceding claims,
wherein
the specific detection pattern (5) additionally comprises at least one further time-independent identification parameter / characteristic value (12) ascertained using a further measuring signal (11).

6. The method (100) for identifying a rail vehicle wheel (1) according to the preceding claim, wherein
the additional further identification parameter / characteristic value (12) is a rate of wear from a transverse profile of a rail vehicle wheel (1), in particular a wheel flange thickness, a wheel flange height and / or a flank angle.

7. The method (100) for identifying a rail vehicle wheel (1) according to at least one of the preceding claims,
wherein
the predefined reference-specific detection pattern(s) (9) is / are or become(s) stored (150) in a database (52), and / or the reference-specific detection pattern(s) (9), is / are updated (160), in particular with the ascertained specific detection pattern (5) of the rail vehicle wheel (1) to be identified, in particular in the database (52).

8. The method (100) for identifying a rail vehicle wheel (1) according to at least one of the preceding claims,
wherein
a deviation / tolerance is permitted or taken into account during the comparison (120).

9. The method (100) for identifying a rail vehicle wheel (1) according to at least one of the preceding claims,
**used**
for a trend tracking (170) of a physical variable (13) of the rail vehicle wheel (1), wherein the specific detection pattern (5) of the rail vehicle wheel (1) is ascertained and compared multiple times.

10. The method (100) for identifying a rail vehicle wheel (1) according to at least the preceding claim,
**used**
for preventive maintenance, wherein a trend and / or multiple comparison (120) is / are used to ascertain a wheel damage on the rail vehicle wheel (1) that is identified or to be identified.

11. The method (100) for identifying a rail vehicle wheel (1) according to at least one of claims 1 to 8,
**used**
to identify an axle (16) of a rail vehicle (14), of a bogie (15) of the rail vehicle (14) and / or of the rail vehicle (14), wherein the specific detection patterns (5) of multiple rail vehicle wheels (1) to be identified are combined, in particular those of an axle (16) of the rail vehicle (14), of a bogie (15) of the rail vehicle (14) and / or of the rail vehicle (14).

12. The method (100) for identifying a rail vehicle wheel (1) according to claim 11,
**wherein**
the combination takes into account a position of the rail vehicle wheel (1) to be identified in the rail vehicle (14).

13. An arrangement (50) for identifying a rail vehicle wheel (1), including an ascertainment unit (51),
wherein
the ascertainment unit (51) is configured to carry out the method (100) for identifying a rail vehicle wheel (1) according to any one of claims 1 to 8.

14. The arrangement (50) for identifying a rail vehicle wheel (1) according to claim 13, comprising
a load measuring device (3), in particular a measuring section (10), which includes a measuring rail (3) or a measuring tie (3), which is configured to ascertain (140) the rollover signal (4).

15. The arrangement (50) for identifying a rail vehicle wheel (1) according to claim 13 or 14, comprising
a database (52), in which the reference-specific detection pattern(s) (9) is / are stored.

## Revendications

1. Méthode (100) d'identification d'une roue de véhicule ferroviaire (1)
dans laquelle
- un modèle d'identification spécifique (5) est déterminé (110) en utilisant un signal de renversement (4) d'une roue de véhicule ferroviaire (1), déterminé au moyen d'un dispositif de mesure de charge (3) disposé sur un rail (2),
le signal de renversement (4) décrivant une courbe temporelle d'une charge de rail (6) provoquée par la roue de véhicule ferroviaire (1) sur le rail (2) équipé du dispositif de mesure de charge (3) lors du renversement (7),
et le modèle d'identification spécifique (5) comprenant un / une ou plusieurs paramètre(s) / caractéristiques d'identification indépendants du temps (8) déterminés à l'aide du signal de renversement (4),
- le modèle d'identification spécifique (5) de la roue du véhicule ferroviaire (1) est comparé (120) à un ou plusieurs modèles d'identification spécifiques à la référence (9) de roues de véhicules ferroviaires (1) et
- la roue du véhicule ferroviaire (1) est identifié (130) par la comparaison (120).

2. Méthode (100) d'identification d'une roue de véhicule ferroviaire (1) selon au moins l'une des revendications ci-dessus
dans laquelle
le signal de renversement (4) est déterminé (140) à l'aide d'un dispositif de mesure de charge (3), en particulier au moyen d'une section de mesure (10) qui comprend un rail de mesure (3) ou un seuil de mesure (3) lorsque la roue du véhicule ferroviaire (1) roule sur (7) le rail (2) équipé du dispositif de mesure de charge (3).

3. Méthode (100) d'identification d'une roue de véhicule ferroviaire (1) selon au moins l'une des revendications ci-dessus
dans lequel
le signal de renversement (4) est un signal de force, de couple et / ou d'accélération.

4. Méthode (100) d'identification d'une roue de véhicule ferroviaire (1) selon au moins l'une des revendications ci-dessus
dans lequel
le paramètre / la caractéristique d'identification indépendant du temps (8) est
- une circonférence de roue, une imperfection, notamment un méplat, une rugosité ou une non-circularité, notamment une non-circularité périodique, et / ou
- une courbe de charge en fonction d'un angle de roue ou d'une circonférence de roue, en particulier une courbe de charge corrigée en phase et / ou normalisée, et / ou
- un spectre de fréquence, un spectre de longueurs d'onde ou leurs rapports d'amplitude d'une courbe de charge.

5. Méthode (100) d'identification d'une roue de véhicule ferroviaire (1) selon au moins l'une des revendications ci-dessus
dans lequel
le modelé d'identification spécifique (5) comprend également au moins un autre paramètre / caractéristique d'identification indépendant du temps (8) déterminés à l'aide d'un autre signal de mesure (11).

6. Méthode (100) d'identification d'une roue de véhicule ferroviaire (1) selon la revendication ci-dessus
dans lequel
l'autre paramètre / caractéristique d'identification (12) est une mesure d'usure d'un profil transversal d'une roue de véhicule ferroviaire (1), en particulier une épaisseur de boudin, une hauteur de boudin et / ou un angle de flanc.

7. Méthode (100) d'identification d'une roue de véhicule ferroviaire (1) selon au moins l'une des revendications ci-dessus
dans lequel
le(s) modèles d'identification spécifiques à la référence prédéfinis (9) sont ou seront enregistrés (150) dans une base de données (52) et / ou le(s) modèles d'identification spécifiques à la référence (9) sont actualisés (160), en particulier avec le modèle d'identification (5) spécifique déterminé de la roue du véhicule ferroviaire (1) à identifier, en particulier dans la base de données (52).

8. Méthode (100) d'identification d'une roue de véhicule ferroviaire (1) selon au moins l'une des revendications ci-dessus
dans lequel
un écart / une tolérance est autorisé(e) ou pris(e) en compte dans la comparaison (120).

9. Méthode (100) d'identification d'une roue de véhicule ferroviaire (1) selon au moins l'une des revendications ci-dessus,
**utilisé**
pour un suivi de tendance (170) d'une grandeur physique (13) de la roue de véhicule ferroviaire (1), le modèle d'identification spécifique (5) de la roue de véhicule ferroviaire (1) étant déterminé et comparé plusieurs fois.

10. Méthode (100) d'identification d'une roue de véhicule ferroviaire (1) selon revendication 9 **utilisés pour**
l'entretien préventif, dans lequel, en utilisant la tendance et / ou la comparaison multiple (120), un dommage de roue est détecté sur la roue du véhicule ferroviaire (1) à identifier ou identifiée.

11. Méthode (100) d'identification d'une roue de véhicule ferroviaire (1) selon au moins l'une des revendications 1 à 8, **utilisés pour**
l'identification d'un essieu (16) d'un véhicule ferroviaire (14), d'un bogie (15) du véhicule ferroviaire (14) et / ou du véhicule ferroviaire (14), les modèles d'identification spécifiques (5) de plusieurs roues de véhicule ferroviaire (1) à identifier, notamment d'un essieu (16) du véhicule ferroviaire (14), d'un bogie (15) du véhicule ferroviaire (14) et / ou du véhicule ferroviaire (14), étant combinés.

12. Méthode (100) d'identification d'une roue de véhicule ferroviaire (1) selon la revendication 11,
dans lequel
la combinaison tient compte de la position de la roue du véhicule ferroviaire (1) à identifier dans le véhicule ferroviaire (14).

13. Disposition (50) d'identification d'une roue de véhicule ferroviaire (1) avec un unité d'enquête (51),
dans lequel
l'unité d'enquête (51) est aménagée pour la mise en oeuvre du méthode (100) d'identification d'une roue de véhicule ferroviaire (1) selon l'une des revendications 1 à 8 ci-dessus.

14. Disposition (50) d'identification d'une roue de véhicule ferroviaire (1) selon la revendication 13,
comprenant
un dispositif de mesure de charge (3), en particulier une section de mesure (10) avec une barre de mesure (3) ou un seuil de mesure (3) qui est aménagé pour déterminer (140) le signal de renversement (4).

15. Disposition (50) d'identification d'une roue de véhicule ferroviaire (1) selon la revendication 13 ou 14,
comprenant
une base de données (52) dans laquelle sont enregistrés le(s) modèle(s) d'identification spécifique(s) à la référence (9).
